(19) **Europäisches Patentamt**

**European Patent Office**

**Office européen des brevets**

(11) Veröffentlichungsnummer: **0 159 022**

**B1**

(12) # EUROPÄISCHE PATENTSCHRIFT

(45) Veröffentlichungstag der Patentschrift:
12.07.89

(51) Int. Cl.⁴: **A 01 G 7/00**

(21) Anmeldenummer: **85104623.5**

(22) Anmeldetag: **17.04.85**

(54) Verfahren zur quantitativen Ermittlung eines durch unterschiedliche N-Versorgung bedingten pflanzenspezifischen Kennwertes einer bestimmten Pflanzensorte.

(30) Priorität: **17.04.84 DE 3414572**

(43) Veröffentlichungstag der Anmeldung:
**23.10.85 Patentblatt 85/43**

(45) Bekanntmachung des Hinweises auf die Patenterteilung:
**12.07.89 Patentblatt 89/28**

(84) Benannte Vertragsstaaten:
**AT BE CH DE FR GB IT LI LU NL SE**

(56) Entgegenhaltungen:
**VERÖFFENTLICHUNG DER KWS KLEINWANZLEBENER SAATZUCHT AG - BEREICH MAIS, Einbeck, 4. Mitteilung, 1983; "Reife-Untersuchung bei Körnermais und CCM"**
**TH. ROEMER et al., Band 1, 1941, Seiten 280, 293, 294, "Handbuch der Pflanzenzüchtung", "Grundlagen der Pflanzenzüchtung"; P. PAREY, Berlin**

(73) Patentinhaber: **Rusch, Volker, Dipl.- Biol., Dr.rer.nat., Schwalbenweg 6, D-6348 Herborn (DE)**

(72) Erfinder: **Rusch, Volker, Dipl.- Biol. Dr.rer.nat., Schwalbenweg 6, D-6348 Herborn (DE)**
Erfinder: **Pählich, Edwin, Prof. Dr. rer. nat., Schillerstrasse 3, D-6302 Lich (DE)**
Erfinder: **Zimmermann, Kurt, Dipl.- Biol. Dr. rer.nat., Mittelstrasse 17, D-6348 Herborn-Seelbach (DE)**

(74) Vertreter: **Pätzold, Herbert, Dr.- Ing., Widenmayerstrasse 49, D-8000 München 22 (DE)**

EP 0 159 022 B1

**Beschreibung**

Die Erfindung betrifft ein Verfahren zur quantitativen Ermittlung eines durch unterschiedliche N-Versorgung bedingten pflanzenspezifischen Kennwertes einer bestimmten Pflanzensorte unter Berücksichtigung standortabhängiger Modifikationen. Die N-Versorgung von Pflanzen ist bei konventionellem Anbau mit herkömmlichen mineralischer Stickstoffdüngung, anders als beim biologischen oder biologisch dynamischen Anbau mit Stallmistdüngung.

Die Stickstoffversorgung von Kulturpflanzen im konventionellen Land- und Gartenbau erfolgt im großen Umfange über die Applikation der anorganischen Vorstufen $NO_3^-$, $NH_4^+$ mineralischer Stickstoffdüngung vor oder während der Keimungs- bzw. der frühen Vegetationsphasen der Kulturpflanzen. Im Vergleich zum ökologischen Anbau resultieren aus der mineralischen Stickstoffdüngung Veränderungern des Vegetationskörpers der Pflanzen. Zu diesen Veränderungen gehören z. B. die erhöhte Produkton an Biomasse, die Reduktion des Trockengewichts im Vergleich zum Frischgewicht, frühzeitige Zerfallerscheinungen nach der Ernte, größere Anfälligkeit für Pilzbefall und Insektenfraß etc.

Im ökologischen (biologischen) Anbau wird auf die vorstehend erwähnte mineralische N-Versorgung verzichtet. Dadurch entfällt eine schubartige Überschwemmung des Stoffwechsels mit mineralischem N-Vorstufen. Die oben teilweise aufgezählten Folgeerscheinungen einer N-Düngung bleiben daher aus.

Durch die Druckschrift "KWS Kleinwanzlebener Saatzucht AG", Bereich Mais, Einbeck, 4. Mitteilung, 1983, ist eine Untersuchung bekannt geworden, in der die Reifeentwicklung an verschiedenen Standorten und verschiedenen Maissorten bei gleicher Düngung im Vergleich zu Vorjahren aufgezeigt wird. Hierbei werden das Trockengewicht vom Maiskolben und Maiskorn dem reifen Maiskornfrischgewicht mit 14 % Wassergehalt gegenübergestellt. Dabei wurde festgestellt, daß unabhängig vom Standort bis zu einem Trockenmassegehalt vo ca. 60 % im Maiskorn noch Nährstoffe eingelagert werden. Je nach Sorte und Standort zeigen sich deutliche Unterschiede in der Reifeentwicklung. Hieraus sind aber noch keine pflanzenspezifischen Kennwerte für eine bestimmte Pflanzensorte mit unterschiedlicher N-Versorgung bei Ausschaltung umweltbedingter Einflüsse (standortabhängige Modifikationen) erhältlich.

Aufgabe der Erfindung ist es, einfache Verfahren zur Ermittlung charakteristischer pflanzenspezifischer Kennwerte anzugeben, die unter Berücksichtigung pflanzenphysiologischer bzw. pflanzenbiochemischer Kriterien eine eindeutige Unterscheidung bzw. Erkennung der Pflanzen mit unterschiedlicher N-Versorgung infolge konventionellem oder ökologischem Anbau zulassen.

Einer ersten erfindungsgemäßen Lösung dieser Aufgabe liegt die Vorstellung zugrunde, daß die schubweise Versorgung von Pflanzen mit N-haltigen Mineraldüngern aus pflanzen-Physiologischer Sicht ein massiver Eingriff in das sogenannte steady-state Gefüge des Stoffwechsels ist. Die Pflanzen reagieren auf einen Stickstoff-Schub mit Stoffwechselanpassungen, d. h. sie akklimatisieren sich und prägen dadurch bestimmte typische Merkmale aus. Ein Stickstoffschub führt unter anderem zur Ausbildung größerer Zellen (Biomasse), deren Trockengewichtskomponenten (Wandmaterial, nicht flüchtige Zellbestandteile) und quellfähigen Anteile (Proteine und andere hydrophile Makromoleküle) gegenüber ungedüngten Pflanzen ebenfalls modifiziert sind. Daten aus dem Bereich des Wasserhaushaltes der Pflanzen bilden aufgrund dieser Überlegungen eine Basis für die Definition quantitativer Unterscheidungsmerkmale.

Aufgrund der Vorstellung der vergrößerten Biomasse wurde erfinderseits erwartet, daß entsprechende Meßzahlen ortspezifisch sind. Durch eine Relativierung der Meßzahlen sollen vor allem ortsbedingte Modifikationen (Standorteinflüsse) weitgehend ausgeschaltet werden.

Auf der Basis dieser Vorstellungen wird die vorstehende Aufgabe erfindungsgemäß mit den kennzeichnenden Merkmalen des Anspruches 1 gelöst. Vorteilhafte Ausführungen ergeben sich aus den Merkmalen der auf den Anspruch 1 rückbezogenen, Unteransprüche.

Einer weiteren erfindungsgemäßen Lösung dieser Aufgabe liegt die Vorstellung zugrunde, daß die Akklimatisation von Pflanzen an unterschiedliche Bedingungen der N-Versorgung auch dazu führt, daß wichtige Enzyme der N-Metabolisierung moduliert werden. Sie passen ihre Katalysatoreigenschaften den jeweiligen Bedingungen an. Damit sind Enzyme geeignete Kandidaten, ein System zu charakterisieren und unterschiedliche Systeme voneinander zu unterscheiden, sofern unterschiedliche Enzymcharakteristiken auftreten. Von der pflanzlichen Glutamatdehydrogenase ist bekannt, daß sie sehr empfindlich auf Veränderungen der N-Versorgung reagiert. Neben anderen Phänomenen verändert sich besonders auffällig das Verhältnis der Vor- zur Rückreaktion dieses Enzyms.

Aufgrund der Vorstellung unterschiedlicher Enzymcharakteristiken wird die vorstehende Aufgabe erfindungsgemäß auch mit den kennzeichnenden Merkmalen des Anspruches 6 gelöst. Vorteilhafte Ausführungen ergeben sich aus dem Merkmal des auf den Anspruch 6 zurückbezogenen Unteranspruches 5. Die Kennwerte nach den beiden erfindungsgemäßen Lösungen können auch gemeinsam als Unterscheidungskriterium für Pflanzen unterschiedlicher Kulturverfahren dienen.

Die Erfindung wird nachstehend anhand von Ausführungsbeispielen mehr im einzelnen offenbart.

Zunächst wird die Erfindung im Rahmen des Anspruches 1 und der zugehörigen Unteransprüche für ein Ausführungsbeispiel näher beschrieben und erläutert:

Genetisch einheitliches Pflanzenmaterial (identische Kultursorten, z. B. Möhren) aus konventionellem (mineralische Stickstoff-Düngung), biologisch organischem (Stallmist) und biologisch dynamischem Anbau werden miteinander verglichen.

Es werden Pflanzen oder Pflanzenteile (Blätter, Wurzeln, Knollen etc.) gleichen physiologischen Alters

2

verglichen.

Erfindungsgemäß werden folgende Meßwerte ermittelt und zur weitgehenden Ausschaltung von modulierten Einflüssen (Standorten) in der nachstehenden Weise relativiert:

### 1. Ermittlung des Quellkörperanteiles "a"

Der Quellkörperanteil "a" sagt etwas aus über den absoluten Mengenanteil quellfähiger Bestandteile (Proteine, Zellulose etc.) der zellfraktion.

Zur Bestimmung des Quellkörperanteiles "a" wird z. B. das Acetonpuderverfahren angewendet. Hierbei wird das Probenmaterial in einem Überschuß aus kaltem Aceton homogenisiert, filtriert und mit einem Überschuß an Aceton gewaschen. Der Acetonpuderanteil wird aus den vakuumfiltrierten Gewebescheiben bestimmt.

Der Quellkörperanteil "a" ergibt sich aus dem Verhältnis von Gramm Acetonpuder AcP zu Gramm maximalem Frischgewicht $FG_{max}$ des Probenmaterials bzw.:

$$a = \frac{gAcP}{gFG_{max}}$$

### 2. Ermittlung der Quellkörpercharakteristik "b"

Aus dem gewonnenen Acetonpuder erhält man die Quellkörpercharakteristik "b" durch isopiestische Sättigung über dem Dampfdruck bei vorgegebener Temperatur. Die Quellkörpercharakteristik beschreibt die Summe der spezifischen Hydratationseigenschaften der quellfähigen zellbestandteile der Acetonpuderfraktion. Die Quellkörpercharakteristik "b" ergibt sich aus dem Verhältnis von Gramm Adsorption $H_2O = gA_{H_2O}$ zu Gramm Acetonpuder $= gAcP$

$$b = \frac{gA_{H_2O}}{gAcP}$$

### 3. Relativierte Wassercharakteristik "x"

Um eine von externen Parametern im wesentlichen unabhängige Meßgröße "x" zu erhalten, die als relativierte Wassercharakteristik bezeichnet wird, werden der Quellkörperanteil "a" und die Quellkörpercharakteristik "b" erfindungsgemäß in das Verhältnis:

$$a : b = 1 : x$$

$$\text{oder } x = \frac{gA_{H_2O} \cdot gFG_{max}}{(gAcP)^2}$$

gesetzt.

### 4. Trockengewichtscharakteristik "y"

Es ist bekannt, daß Pflanzenzellen aus Kulturen des konventionellen Landbaues relativ wasserreich sind und daher ein prozentual niedriges Trockengewicht aufweisen. Der Gesamtzellwassergehalt wird mit $W_{H_2O}$ und das Trockengewicht (z. B. 12 Std. bei 80°C getrocknetes Probenmaterial) wird mit TG bezeichnet. Die einzelnen Meßgrößen $FG_{max}$, TG und $W_{H_2O} = FG_{max}$ - TG können bei den Proben erheblich streuen und ergeben daher für sich allein noch keine zuverlässigen Anhaltspunkte für Unterschiede der Pflanzenmaterialien aus unterschiedlichen Anbauverfahren. Die Meßgrößen werden daher erfindungsgemäß in ein Verhältnis zueinander gesetzt. Die nachstehende Verhältnisgleichung zeigt eine vorzugsweise Verknüpfung der vorstehenden Parameter:

$$\frac{W_{H_2O}}{TG} : 1 = FG_{max} : y,$$

Der Wert "y" wird als Trockengewichtscharakteristik bezeichnet. Es folgt:

$$y = \frac{FG_{max} \cdot TG}{W_{H_2O}}.$$

Die erfindungsgemäßen Kennzahlen x (relativierte Wassercharakteristik) und y (Trockengewichtscharakteristik) werden in der nachstehenden Weise exponentiell verknüpft, um Pflanzen aus biologischen und konventionellen Anbau sicher voneinander unterscheiden zu können, wobei ortsbedingte Einflüsse die Ergebnisse im wesentlichen unbeeinflußt lassen.

Erfindungsgemäßer Pflanzenkennwert = $(y^x)^{-1}$

Die nachfolgende Tabelle 1 zeigt die ermittelten Parameter $FG_{max}$, AcP, $A_{H_2O}$, $W_{H_2O}$ von Möhren (Wurzeln) die aus den Parametern errechneten x-(relativierte Wassercharakteristik) und y-(relativierte Trockengewichtscharakteristik) Werte und die hieraus errechneten $(y^x)^{-1}$-Werte.

**Tabelle 1**

| Pflanzenmaterial | $gFG_{max}$ | $gAcP$ | $gA_{H_2O}$ | $gW_{H_2O}$ | $g_{TG}$ | x | y | $(y^x)^{-1}$ |
|---|---|---|---|---|---|---|---|---|
| konventionell (N-Düngung) | 4,691 | 0,2461 | 0,2409 | 4,2280 | 0,4630 | 18,7 | 0,515 | $245 \cdot 10^3$ |
| ökologisch (Stallmistdüngung) | 4,615 | 0,2811 | 0,2517 | 4,1152 | 0,4997 | 14,7 | 0,560 | $5,0 \cdot 10^3$ |
| ökologisch (bio-dynam.) | 4,671 | 0,2766 | 0,2632 | 4,1854 | 0,4853 | 16,1 | 0,542 | $19,2 \cdot 10^3$ |

Die Werte für die Parameter wurden jeweils aus 8 Einzelmessungen gemittelt.

Die Tabelle zeigt, daß der $(y^x)^{-1}$-Kennwert für konventionell angebaute Möhren mit $245.10^3$ sich sehr deutlich von den entsprechenden $(y^x)^{-1}$-Kennwerten für biologisch organisch (Stallmistdüngung) bzw. biologischdynamisch angebaute Möhren mit $5,0 \cdot 10^3$ bzw. $19,2 \cdot 10^3$ unterscheidet, so daß aufgrund dieser Ergebnisse eine sichere objektive Unterscheidung der Möhren (Wurzeln) nach konventionellen und ökologischem Anbau möglich ist.

Die Erfindung zeigt somit einen einfachen Weg, einzelnen Pflanzenarten (z. B. Gemüse, Obst, Getreide) bestimmte Kennwerte bzw. Kennwertbereiche zuzuordnen, die für bestimmte Anbaumethoden typisch sind und die bei wesentlich unterschiedlichen Anbaumethoden (herkömmlich; ökologisch) sich auch beachtlich voneinander unterscheiden, wobei standortbedingte Einflüsse unbeachtlich bleiben können.

Im nachfolgenden wird die Erfindung im Rahmen des Anspruches 4 und der zugehörigen Unteransprüche für ein Ausführungsbeispiel mehr im einzelnen beschrieben und erläutert:

Es ist eingangs bereits erwähnt, daß die Glutamatdehydrogenase sehr empfindlich auf Veränderungen der H-Versorgung reagiert, wobei sich u. a. besonders auffällig das Verhältnis der Vor- bzw. Rückreaktion dieses Enzyms verändert. Die Vorreaktion ist durch die reduktive Animierung der $\alpha$-Ketoglutarsäure und die Rückreaktion ist durch die oxidative Desanimierung der Glutaminsäure charakterisiert. Um beide Veränderungen mit einem Meßansatz erfassen zu können, ist erfindungsgemäß ein relaxationskinetisches Verfahren entwickelt worden.

**Die Relaxationscharakteristik**

Enzyme katalysieren den reversiblen Umsatz von Substrat S in Produkt P. Es gilt folgendes Prinzip:

$$S \underset{k_{r\ddot{u}ck}}{\overset{k_{vor}}{\rightleftarrows}} P$$

Die Geschwindigkeitskonstanten $k_{vor}$ und $k_{r\ddot{u}ck}$ charakterisieren den Enzymkatalysator. Sie verschlüsseln die $V_{max}$- und $k_M$-Werte für beide Reaktionsrichtungen und berücksichtigen zudem die Gleichgewichtssituation der Reaktion bei vorgegebenen Reaktionsbedingungen (sie enthalten die Gleichgewichtskonstante sowie die Gleichgewichtskonzentrationen von Substrat(en) und Produkt(en). Führt eine Behandlung von Pflanzen dazu, daß bestimmte Enzyme modifiziert werden (ihre Parameter $K_M$ und $V_{max}$ verändern), ist dies durch die Bestimmung der Geschwindigkeitskonstanten $k_{vor}$ bzw. $k_{r\ddot{u}ck}$ darstellbar. Die Relaxationszeit $\tau$ ist eine übergeordnete Charakteristik, die beide Geschwindigkeitskonstanten in sich vereint. Es gilt:

$$\tau = \frac{1}{k_{vor} + k_{r\ddot{u}ck}}$$

Die Relaxationszeit $\tau$ kann leicht nach den üblichen und weithin bekannten Methoden ermittelt werden. Dazu wird die Enzymlösung (ein bestimmter Volumenanteil des Pflanzenextraktes) einem definierten Testgemisch zugesetzt (das Testgemisch enthält die Substrate und Produkte der Glutamatdehydrogenase-Reaktion) und die

4

dann einsetzende Reaktion nach dem "optischen Test" (Warburg) gemessen oder registriert. Die Auswertung des Meßergebnisses wurde nach Guggenheim vorgenommen. Es gilt der folgende verallgemeinernde Zusammenhang:

$$-\frac{d\Delta s}{dt} = V_{netto} = \Delta S\frac{1}{\tau}$$

Die Reaktionsgeschwindigkeit $V_{netto}$ ($V_{vor}$ - $V_{rück}$) hängt ab von dem reziproken Wert der Relaxationszeit 1 und der Auslenkung des Systems aus dem Gleichgewicht $\Delta$ S. Eine Erhöhung der Enzymkonzentration forciert $V_{netto}$. Es besteht daher eine lineare Abhängigkeit zwischen $V_{netto}$ und $1/\tau$ bzw. zwischen $\tau$ und $1//V_{netto}$. Trägt man $\tau$ gegen $1/V_{netto}$ für verschiedene Enzymkonzentrationen auf, erhält man eine Gerade. Unterscheiden sich die zu vergleichenden Enzyme in ihren Enzymparametern, erhält man in dem Koordinatensystem Geraden mit identischer Steigung, aber abweichenden y-Durchgängen.

In dem nachstehenden Diagramm ist ein entsprechender Versuch mit Möhren dargestellt ($B_{61}$: biologischer Anbau; $B_{62}$: konventioneller Anbau). Die von der Enzymkonzentration abhängigen Relaxationszeiten liegen jeweils auf einer Geraden mit unterschiedlichen y-Durchgängen.

Die beiden Geraden unterscheiden sich aber auch in ihren Steigungen (formal ist die Steigung $\Delta$ S). Da $\Delta$ S vorgegeben und für beide Kinetiken identisch ist, könnte man schließen, daß beide Enzyme "auf unterschiedliche Gleichgewichte" hin katalysieren. Das ist aber aus theoretischen Gründen nicht möglich, da Katalysatoren bekanntlich nicht das Gleichgewicht verändern. Der Befund kann nur so gedeutet werden, daß eines der Enzyme ein "Pseudogleichgewicht" anstrebt, also z. B. durch veränderte Rückkoppelungseigenschaften (Produkthemmung) noch vor Erreichen des Gleichgewichts $V_{netto}$ zum Erliegen kommt. Veränderte Enzymparameter (unterschiedliche y-Durchgänge) sind also gepaart mit verändertem Regelverhalten (z. B. veränderter Rückkoppelung). Aus beiden Veränderungen wird nun erfindungsgemäß ein Kennwert errechnet, indem der y-Durchgang (der Wert von $\tau$ für $1/v \to 0$) durch den Betrag der Steigung der Geraden dividiert wird, wie sich aus Tabelle 2 ergibt:

**Tabelle 2**

| Kurve | Steigung | y-Durchgang | Kennwerte |
|-------|----------|-------------|-----------|
| $B_{61}$ | -0,28 | +1,8 | -6,4 |
| $B_{62}$ | -0,21 | -10,4 | +49,5 |

Die erfindungsgemäß ermittelten Kennwerte geben die Möglichkeit, die Pflanzenmaterialien zu charakterisieren und zwischen unterschiedlichen Anzuchten sicher zu differenzieren. Das Relaxationstestverfahren ist etwas aufwendiger als das eingangs beschriebene Akklimatisationsverfahren kann aber gegebenenfalls vorteilhafterweise mit herangezogen werden, um z. B. Zweifelsfälle sicher ausräumen zu können.

Um die Streubreite der Ergebnisse noch weiter zu verbessern, kann die Bezugsgröße $FG_{max}$ durch den DNS-Gehalt der Gewebeproben ersetzt werden.

Diagramm

EP 0 159 022 B1

**Patentansprüche**

1. Verfahren zur quantitativen Ermittlung eines durch unterschiedliche N-Versorgung bedingten pflanzenspezifischen Kennwertes einer Pflanzensorte unter Berücksichtigung standortabhängiger Modifikationen, dadurch gekennzeichnet, daß die nachstehenden Pflanzenparameter der Sorte:

$FG_{max}$ = maximales Frischgewicht
$TG$ = Trockengewicht
$AcP$ = Gewichtsanteil an quellfähigen Zellbestandteilen
$A_{H_2O}$ = Gewichtsanteil an adsorptiven Wasser
$W_{H_2O}$ = Gewichsanteil an Zellwasser

gemessen und in ein von standortabhängigen Modifikationen unbeeinflußtes Verhältnis zueinander gesetzt werden.

2. Verfahren nach Anspruch 1, dadurch gekennzeichnet, daß zur Ermittlung einer relativierten Wassercharakteristik x die gemessenen Pflanzenparameter:

$A_{H_2O}$, $FG_{max}$ oder $AcP$

in ein erstes und zur Ermittlung einer relativierten Trockengewichtscharakteristik y die gemessenen Pflanzenparameter

$FG_{max}$, $TG$ und $W_{H_2O}$

in ein zweites Zwischen-Verhältnis und diese in ein von standortbedingten Modifikationen unbeeinflußtes Haupt-Verhältnis zueinander gesetzt werden.

3. Verfahren nach Anspruch 2, dadurch gekennzeichnet, daß eine relativierte Wassercharakteristik:

$$x = \frac{gA_{H_2O} \cdot gFG_{max}}{(gAcP)^2}$$

und eine relativierte Trockengewichtscharakteristik:

$$y = \frac{gFG_{max} \cdot gTG}{gW_{H_2O}}$$

ermittelt und die erhaltenen x- und y-Werte exponentiell verknüpft werden.

4. Verfahren nach Anspruch 3, dadurch gekennzeichnet, daß die exponentielle Verknüpfung

$$(y^x)^{-1}$$

lautet.

5. Ferfahren nach Anspruch 1, dadurch gekennzeichnet, daß der AcP-Gewichtsanteil durch ein an sich bekanntes Acetonpuder-Verfahren gemessen wird.

6. Verfahren zur quantitativen Ermittlung eines durch unterschiedliche N-Versorgung bedingten pflanzenspezifischen Kennwertes einer Pflanzensorte unter Berücksichtigung standortabhängiger Modifikationen, dadurch gekennzeichnet, daß ein auf Änderung der N-Versorgung besonders empfindlich reagierendes Enzym oder Enzymgemisch aus den zu untersuchenden Pflanzen isoliert und die Relaxationszeit des Enyzms bzw. Enzymgemisches für verschiedene Enzymkonzentrationen ermittelt wird.

7. Verfahren nach Anspruch 4, dadurch gekennzeichnet, daß das Enzym das GDH-Enzym ist.

8. Verfahren nach Anspruch 1 und 6, dadurch gekennzeichnet, daß die Bezugsgröße $FG_{max}$ durch den DNS-Gehalt der Gewebeprobe ersetzt ist.

**Claims**

1. A process for the quantitative determination of a plantspecific characteristic value of a plant variety conditioned by a varying nitrogen supply, taking into account location-dependent modifications, characterized in that the following plant parameters of the variety

$FG_{max}$ = maximum fresh weight
$TG$ = dry weight
$AcP$ = proportion by weight of swellable cell components
$A_{H_2O}$ = proportion by weight of adsorptive water
$W_{H_2O}$ = proportion by weight of cell water are measured and placed in a ratio in relation to one another which is unaffected by location-dependent modifications.

2. A process according to claim 1, characterized in that to determine a relativized water characteristic x the measured plant parameters:

$A_{H_2O}$, $FG_{max}$ or AcP

are placed in a first ratio, and to determine a relativized dry weight characteristic y the measured plant parameters

$FG_{max}$, TG and $W_{H_2O}$

are placed in a second, intermediate ratio, and such ratios are placed in a main ratio in relation to one another which is unaffected by location-condition modifications.

3. A process according to claim 2, characterized in that a relativized water characteristic:

$$x = \frac{gA_{H_2O} \cdot gFG_{max}}{(gAcP)^2}$$

and a relativized dry weight characteristic

$$y = \frac{gFG_{max} \cdot gTG}{gW_{H_2O}}$$

are determined and the x and y values obtained are connected exponentially.

4. A process according to claim 3, characterized in that the exponential connection is:

$$(y^x)^{-1}$$

5. A process according to claim 1, characterized in that the percentage by weight of AcP is measured by a known acetone powder process.

6. A process for the quantitative determination of a plant-specific characteristic value of a plant variety conditioned by a varying nitrogen supply, taking into account location-dependent modifications, characterized in that an enzyme or enzyme mixture reacting particularly sensitively to a change in the nitrogen supply is isolated from the plants to be investigated and the relaxation time of the enzyme or enzyme mixture is determined for different enzyme concentrations.

7. A process according to claim 4, characterized in that the enzyme is the GDH enzyme.

8. A process according to claims 1 and 6, characterized in that DNA content of the tissue sample is substituted for the reference value $FG_{max}$.

**Revendications**

1. Procédé pour la détermination quantitative d'un paramètre spécifique d'une variété de plante, obtenu par approvisionnement différencié en azote, en tenant compte des modifications liées au site de culture, caractérisé en ce qu'on mesure les phytoparamètres suivants de la variété:

$FG_{max}$ = poids frais maximum
TG = poids sec
AcP = fraction pondérale de composants cellulaires susceptibles de gonfler
$A_{H_2O}$ = fraction pondérale d'eau d'adsorption
$W_{H_2O}$ fraction pondérale d'eau de la cellule, et on les combine dans un rapport qui n'est pas influencé par les modifications liées au site de culture.

2. Procédé selon la revendication 1, caractérisé en ce qu'on combine les phytoparamètres mesurés:

$A_{H_2O}$, $FG_{max}$ ou AcP

en un premier rapport intermédiaire pour obtenir une première caractéristique d'eau relativisée $\underline{x}$, et les phytoparamètres $FG_{max}$, TG et $W_{H_2O}$ en un second rapport intermédiaire pour obtenir une caractéristique de poids sec relativisée $\underline{y}$ et on combine ces rapports intermédiaires dans un rapport principal qui n'est pas influencé par les modifications liées au site de culture.

3. Procédé selon la revendication 2, caractérisé en ce qu'on détermine une caractéristique d'eau relativisée

$$x = gA_{H_2O} \cdot gFG_{max}/(gAcP)^2$$

et une caractéristique de poids sec relativisée

$$y = gFG_{max} \cdot gTG / gW_{H_2O},$$

et en ce qu'on combine les valeurs x et y par exponentiation.

4. Procédé selon la revendication 3, caractérisé en ce que l'exponentiation est de la forme $(y^x)^{-1}$.

5. Procédé selon la revendication 1, caractérisé en ce que la fraction pondérale AcP est mesurée par un procédé poudre-acétone connu en soi.

6. Procédé pour la détermination quantitative d'un paramètre spécifique d'une variété de plante, obtenu par approvisionnement diffréncié en azote, en tenant compte des modifications liées au site de culture, caractérisé en ce qu'on isole des plantes étudiées, un enzyme ou un mélange enzymatique réagissant de manière particulièrement sensible à une modification de l'approvisionnement en azote et on détermine le temps de relaxation de l'enzyme ou du mélange enzymatique à différentes concentrations enzymatiques.

7. Procédé selon la revendication 6, caractérisé en ce que l'enzyme est une glutamate-déhydrogénase.

8. Procédé selon les revendications 1 et 6, caractérisé en ce que la grandeur de référence $FG_{max}$ est remplacée par la teneur en ADN des échantillons.